# EUROPÄISCHE PATENTSCHRIFT

(11) **EP 0 873 181 B1**
(45) Veröffentlichungstag und Bekanntmachung des Hinweises auf die Patenterteilung: **14.07.1999**
(21) Anmeldenummer: 96938997.2
(22) Anmeldetag: 08.11.1996
(51) Int. Cl.: B01J 3/04, C04B 40/02, C04B 28/18

(54) **VERFAHREN ZUM HYDROTHERMALEN HÄRTEN UND TROCKNEN VON CSH-GEBUNDENEN FORMKÖRPERN SOWIE VORRICHTUNG ZUR DURCHFÜHRUNG DES VERFAHRENS**
METHOD FOR HYDROTHERMAL HARDENING AND DRYING OF CSH-BONDED MOULDED BODIES AND DEVICE FOR CARRYING OUT THE METHOD
PROCEDE DE DURCISSEMENT HYDROTHERMAL ET DE SECHAGE DE CORPS MOULES LIES PAR HYDRATE DE SILICATE DE CALCIUM (CSH) ET DISPOSITIF DE MISE EN UVRE DUDIT PROCEDE

(30) Priorität: 09.11.1995 DE 19541866
(43) Veröffentlichungstag der Anmeldung: 28.10.1998
(73) Patentinhaber: YTONG AG, D-80797 München (DE)
(72) Erfinder: HAAS, Martin, D-86669 Ludwigsmoos (DE); PERIC, Dobrivoje, D-86529 Schrobenhausen (DE); STIBI, Bernd, D-88069 Tettnang (DE)
(74) Vertreter: Patentanwälte Dr. Solf & Zapf
(86) Internationale Anmeldenummer: EP9604904
(87) Internationale Veröffentlichungsnummer: WO9717131

(56) Entgegenhaltungen:
- EP-A- 0 538 755
- CH-A- 291 452
- DE-B- 3 010 337
- FR-A- 1 556 267
- US-A- 3 327 032

## Beschreibung

Die Erfindung betrifft ein Verfahren nach dem Oberbegriff des Anspruchs 19 sowie eine Vorrichtung nach dem Oberbegriff des Anspruchs 1.

Calciumsilikathydrat-(CSH)-Baustoffe, wie Porenbeton- und Kalksandsteinprodukte, werden in der Regel im Autoklaven bei 10 bis 16 bar Überdruck, entsprechend 184 bis 204°C in Dampfatmosphäre gehärtet. Zur Ausbildung der gewünschten CSH-Phasen, im wesentlichen Tobermorit, müssen für einen bestimmten Zeitraum (in der Größenordnung 5 Stunden) Umgebungsbedingungen von ca. 190°C unter Anwesenheit von Wasser herrschen.

In der Regel wird nach dem Befüllen des Druckbehälters (Autoklaven) mit Rohlingen dieser durch Einspeisen von Wasserdampf über eine Dampfschiene auf einen Druck von ca. 12 bar Überdruck geregelt "hochgefahren". Dieser Auffahrphase geht noch eine Spül- bzw. Evakuierungsphase voraus. Im Anschluß an diese Auffahrphase wird nun dieser Druck für einen bestimmten Zeitraum (z.B. 5 Stunden) unter Sattdampfbedingungen konstant gehalten. Nach dieser Haltephase wird der Druck wieder geregelt auf die Ausgangsbedingungen reduziert.

Die Erwärmung des Materials auf die gewünschte Temperatur (z.B. 190°C) erfolgt dabei in der Auffahrphase durch Kondensation von Wasserdampf an der Materialoberfläche. Die Haltephase dient der Phasenausbildung (Tobermorit) und damit der Härtung des Materials.

Nach der Autoklavierung verlassen die CSH-Bausteine den Autoklaven mit einem Feuchtegehalt in der Größenordnung von 30 bis 40 % (bezogen auf die Trockenmasse). Dieser hohe Feuchtegehalt ist z.B. in erster Linie durch den hohen Wasseranteil bei der Gießung der Baustoffrohlinge begründet. Er wirkt sich nachteilig auf das Transport- und Verarbeitungsgewicht und die bauphysikalischen Eigenschaften (z.B. Wärmedämmung) des Materials während der ersten Jahre (bis zur natürlichen Austrocknung) auf die damit erstellten Bauwerke aus.

Das gattungsgemäße Verfahren nach Anspruch 1 ist aus der US-PS 2 534 303 bekannt. Dieses Verfahren gestattet die gleichzeitige bzw. aufeinanderfolgende Härtung und Trocknung von CSH-Materialien. Durch Einbau einer zusätzlichen Wärmequelle (z.B. dampf- oder thermalölbeheizte Wärmetauscherflächen) im Autoklaven wird zusätzliche Wärmeenergie dem CSH-Material zugeführt, was eine Verdampfung des z.B. durch die Gießung im Material vorhandenen Wassers und damit eine Trocknung des Materials bewirkt. Das bekannte Verfahren kann mit zwei Varianten durchgeführt werden.

Bei der ersten Variante wird nach der Halte- und vor der Abfahrphase getrocknet. Nach Abschluß der Haltephase und damit nach Abschluß der Härtung wird die zusätzliche Wärmequelle im Autoklaven eingeschaltet. Dies bewirkt eine Temperaturerhöhung im Inneren des Autoklaven und damit eine Überhitzung des Dampfes im Autoklaven. Durch die Dampfüberhitzung (und auch durch Temperaturstrahlung) verdampft Wasser aus dem CSH-Material und das Material trocknet von der Oberfläche her beginnend zum Inneren des Materials hin aus. Die Verdampfung des Materialwassers führt zu einer Druckerhöhung im Autoklaven, der durch geregeltes Abblasen von Wasserdampf aus dem Autoklaven begegnet werden kann. Da Autoklaven aus Sicherheitsgründen in der Regel bei bestimmtem Druck nur bis zu bestimmten oberen Grenztemperaturen betrieben werden dürfen, kann wahlweise auch der Druck im Inneren des Autoklaven (von z.B. 12 bar Überdruck auf z.B. 10 bar Überdruck) gesenkt werden.

Da das Material erst nach Abschluß der Härte- bzw. Haltephase getrocknet wird, besteht keine Gefahr einer Materialzerstörung durch zu frühes Verdampfen des Wassers aus der Materialoberfläche. Zur Härtung des Materials wird jedoch zusätzlich Zeit und Energie benötigt.

Dieses bekannte Verfahren wird identisch auch in den Druckschriften DE 33 26 492 A1 und EP 0 133 239 B1 beschrieben.

Bei der zweiten Variante wird während der Auffahr- und der Haltephase getrocknet. Noch vor Erreichen der Haltephase wird bereits die Wärmequelle im Autoklaveninneren eingeschaltet. Sobald an der Materialoberfläche eine ausreichende Härtung eingetreten ist, kann durch Verdampfung des Wassers an der Oberfläche gleichzeitig eine Härtung und Trocknung von außen nach innen erfolgen. Dieses Verfahren ist deshalb möglich, weil in der Regel wesentlich mehr Wasser im CSH-Grünling vorhanden ist, als für die Phasenausbildung und damit zur Härtung benötigt wird. Dieses Verfahren wird in vergleichbarer Weise auch in der DE 33 26 492 A1, EP 0 133 239 B1 und der DE 40 35 061 A1 beschrieben. Sowohl die Frischdampfzufuhr bis zu einem gewissen Druck (z.B. 6 bar) und die anschließende Aufheizung bis zum gewünschten Enddruck (z.B. 12 bar) z.B. durch Wärmestrahlung, als auch die Dampferzeugung im Autoklaveninneren durch auschließliche Wärmezufuhr unter Anwesenheit von Luft werden in diesen Druckschriften beschrieben. Die Art der Dampferzeugung im Autoklaveninneren (Wärmetauscher, Induktionsheizflächen, Mikrowelle) ist dabei unmaßgeblich.

Nach diesen bekannten Verfahren kann Energie eingespart werden. Der Druckaufbau im Autoklaveninneren erfolgt durch Verdampfen von Wasser aus dem Grünling. Auf eine externe Dampfzufuhr kann weitgehend verzichtet werden.

Dadurch, daß der Trocknungsprozeß bereits während der Auffahr- und Haltephase eingeleitet wird, wird auch Zeit gespart.

Durch zu frühes Verdampfen von Wasser aus der Materialoberfläche besteht jedoch die Gefahr einer unzureichenden Phasenausbildung an der Oberfläche. Das Material härtet an der Oberfläche nicht genügend aus und wird dadurch zerstört.

Ziel einer Trocknung von CSH-Baustoffen ist ein gleichmäßiger Trocknungsgrad aller Bausteine. Bei den gegenwärtigen technischen Verfahren wird dies allerdings dadurch erschwert, daß nicht nur eine, sondern mehrere, in der Regel drei, Blöcke gleichzeitig nebeneinander oder übereinander in den Autoklaven eingebracht werden. Um einen hohen Füllungsgrad und damit eine hohe Wirtschaftlichkeit bei der Autoklavierung zu erreichen, sind die Abstände zwischen den Blöcken bewußt sehr klein gehalten. Bei seitlich an den Autoklavenwänden angebrachten Wärmetauscherflächen gelingt es daher nicht, Wärmeenergie in den mittleren Block zu transportieren. Es werden lediglich die Außenwände der beiden äußeren Blöcke beheizt. Die beiden äußeren Blöcke werden getrocknet, der mittlere Block bleibt feucht.

Eine Trocknung im Zentrum des Autoklaven ist daher nur dann technisch möglich, wenn es gelingt, die zusätzlich eingebrachte Wärmeenergie möglichst gleichmäßig an die Oberfläche der Blöcke zu bringen. Dies kann beispielsweise durch erzwungene Strömung (Konvektion) von überhitztem Dampf im Autoklaveninneren erfolgen. Dies bewirkt gleichzeitig einen verbesserten Wärmeübergang zwischen Trocknungsmedium und Materialoberfläche.

Zusätzlich muß das an der Materialoberfläche verdampfte Wasser abgeführt werden, um eine Sättigung des Trocknungsmediums (z.B. überhitzter Dampf) und damit eine Unterbrechung des Trocknungsvorganges an dieser Stelle zu vermeiden. Auch dieses Problem läßt sich durch Konvektion von überhitztem Dampf im Autoklaven lösen.

In den Druckschriften EP 0 538 755 B1 und EP 0 624 561 B1 werden Verfahren beschrieben, die eine erzwungene Strömung des überhitzten Dampfes im Autoklaven ermöglichen sollen.

Nach der EP 0 538 755 B1 soll durch den Einbau von "Konvektionskaminen", die um die seitlichen Wärmetauscherflächen angebracht sind, ein erhöhter Anteil an natürlicher Konvektion im Autoklaveninneren erreicht werden.

Nach der EP 0 624 561 B1 wird die Dampfbewegung im Inneren des Autoklaven durch Druckpulsation mit überhitztem Dampf erreicht. Druckpulsation bedeutet, daß in regelmäßigen Zeitabständen Dampf über das Abfahrregelventil abgeblasen wird, was eine Druckverringerung im Autoklaven bedeutet, und anschließend (überhitzter) Frischdampf über eine Frischdampfschiene wieder in den Autoklaven eingeblasen wird (Druckerhöhung). Die Erzeugung überhitzten Dampfes kann auch im Inneren des Autoklaven durch Wärmetauscher erfolgen.

Nachteilig bei beiden Verfahren ist, daß sich der strömende Dampf nicht bzw. nur mit einem sehr geringen Anteil zwischen den Blöcken bewegt. In Analogie zum Hagen-Poisseulleschen Gesetz sind die Anteile der Volumenströme proportional zur vierten Potenz des Durchmessers der Strömungskanäle. Dies bedeutet, daß bei den derzeit gegebenen strömungstechnischen Voraussetzungen im Autoklaveninneren sich der weitaus größte Anteil des Dampfstromes zwischen Autoklavenwand und den beiden äußeren Blöcken bewegen wird.

Aufgabe der Erfindung ist, ein Verfahren und eine Vorrichtung zu schaffen, mit denen es gelingt, die Wirkung der Härtung und Trocknung zu optimieren.

Die erfindungsgemäße Vorrichtung und das erfindungsgemäße Verfahren sind bevorzugt für die Härtung von Porenbeton geeignet. Die Vorrichtung und das Verfahren sind aber auch zur Härtung und Trocknung beliebiger Calciumsilikathydrat-gebundener Formkörper geeignet.

Das erfindungsgemäße Verfahren beruht im wesentlichen auf den Trocknungsmethoden, wie sie in dem US-Patent 2 524 303 und EP 0 624 561 beschrieben sind. Es werden jedoch die zur Druckpulsation erforderlichen Mengen an überhitztem Dampf nun nicht mehr durch Einblasen und Ablassen, sondern durch Energiezufuhr über Wärmetauscher in einem Kreislaufbetrieb zugeführt. Die erfindungsgemäße Vorrichtung gestattet es, die Strömungswege im Autoklaven so zu verbessern, daß auch eine Konvektion in den Zwischenräumen zwischen den Porenbetonkuchen erfolgen kann.

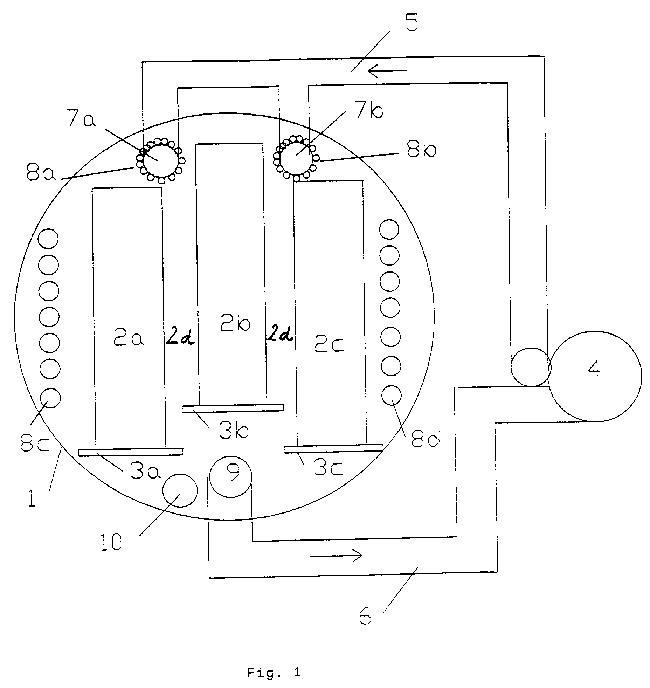

Anhand der Zeichnung (Fig.) wird die Erfindung im folgenden beispielhaft näher erläutert, wobei die einzige Figur schematisch eine Frontansicht eines geöffneten Autoklaven darstellt. In dem Autoklaven 1 befinden sich nebeneinander auf seitlichem Abstand (Zwischenräume 2d) drei Porenbetonkuchen bzw. -blöcke 2a,2b,2c, die auf drei auf entsprechend angepaßten, auf dem Autoklavenboden auf seitlichem Abstand voneinander angeordneten, sich in Längsrichtung erstreckenden Lagerelementen, z.B. Schienen (nicht dargestellt) aufsitzenden Härteböden bzw. -wagen 3a,3b,3c stehen. Härteböden bzw. -wagen sind Tragelemente für die zu härtenden Formkörper. Die Zufuhr von Frischdampf (z.B. 12 bar Überdruck, 191°C), wie er für die Härtung des Porenbetons benötigt wird, erfolgt wie bisher durch eine bodenseitig angeordnete, sich in Längsrichtung erstreckende untere Dampfschiene 10. Eine Dampfschiene ist ein Rohr mit Auslaßöffnungen für Dampf. Ebenso kann der Autoklav Wärmetauscher-Register 8a,8d zur Erzeugung überhitzten Dampfes und somit zur Trocknung des Porenbetons enthalten, die seitlich an den Autoklavenwänden angeordnet sind.

Erfindungsgemäß sind oberhalb der Porenbetonkuchen 2a,2b,2c und dabei zweckmäßigerweise in der Nähe der Zwischenräume 2d zwischen den Porenbetonkuchen zwei weitere obere Dampfschienen 7a, 7b und vorzugsweise eine oder mehrere zusätzliche Dampfschienen 9 unter dem mittleren Härtewagen 3b bzw. ebenfalls in der Nähe der Zwischenräume 2d zwischen den Porenbetonkuchen angeordnet.

Die beiden oberen Dampfschienen 7a,7b sind mit dem Ausgang eines, außerhalb des Autoklaven angebrachten Umwälzers 4 und die untere Dampfschiene 9 mit dem Eingang des Umwälzers 4 verbunden. Der Umwälzer 4 kann entweder mittels eines Ventilators oder einer Dampfstrahldüse realisiert werden.

Die Frischdampfschiene 10 ist nach einer Ausführungsform der Erfindung zur Absaugung des oben eingedrückten Dampfes eingerichtet. Über ein außerhalb des Autoklaven angebrachtes (und in der Figur nicht eingezeichnetes) Drei-Wege-Ventil kann diese Schiene 10 einmal als Frischdampfschiene und einmal als Absaugschiene verwendet werden.

Die oberen Dampfschienen 7a,7b gegebenenfalls auch die Dampfschiene 9 sind vorzugsweise zusätzlich mit Wärmetauscher-Register 8a,8b, die an oder in der Nähe der Schienen angebracht sind, kombiniert. Die Wärmetauscherrohre der Register 8a,8b können sich aber auch im Inneren der Dampfleitungen befinden. Die Dampfschienen 7a,7b,9 wirken dabei wie eine Dampfüberhitzungseinrichtung im Autoklaveninneren.

In den Zuleitungen zu den Dampfschienen 7a,7b,9,10 können sich Einspritzdüsen und Zuleitungen zum Einbringen von Frischwasser befinden. Damit ist es möglich, die Dampftemperatur sehr genau zu regeln. Eine Kühlung des Dampfes mit Wasser ist beispielsweise dann zweckmäßig, wenn die Temperatur an der Oberfläche der Porenbetonkuchen zu frühzeitig die Sattdampfatmosphäre verlassen sollte.

Die Einspritzung von Frischwasser zur Dampfkühlung ist technisch realisierbar, wenn ausreichende Strömungsgeschwindigkeiten in den Dampfleitungen vorherrschen. Die Einspritzung von Frischwasser in ein sich nicht bewegendes Dampfregime (z.B. direkt in den Autoklaven) ist zum einen technisch nicht oder nur mit sehr hohem Aufwand möglich und würde zum anderen auch nicht die erwünschte Dampfkühlung bewirken. Erfindungsgemäß gelingt dies durch die neue Art der Dampfumwälzung und des Kreislaufbetriebs.

Die Anordnung der Dampfschienen 7a,7b und die Anordnung und der Durchmesser der nicht dargestellten Bohrungen (für den Dampfaustritt) in den Dampfschienen ist so gewählt, daß der größte Teil des vom Umwälzer 4 eingedrückten Dampfes in die Zwischenräume 2d zwischen die Porenbetonkuchen gespült wird. Nur ein kleiner Teil der Dampfmenge soll im Raum zwischen den Kuchenaußenflächen und der Autoklavenwand entlang strömen.

Nach einer weiteren besonderen Ausführungsform der Erfindung ist der mittlere Porenbetonkuchen 2b gegenüber den äußeren beiden Kuchen angehoben gelagert. Die Höhe dieser Anhebung ist vorzugsweise etwa genauso groß wie die Breite der Zwischenräume zwischen den Kuchen, z.B. ca. 10 bis 20 cm. Dadurch werden sehr günstige Strömungskanäle mit gleichmäßigem Durchmesser zwischen den Kuchen geschaffen.

Technisch läßt sich eine Anhebung des mittleren Kuchens dadurch realisieren, daß die üblicherweise verwendeten mittleren Dorne des Härtewagens (nicht eingezeichnet), die den mittleren Härteboden 3b aufnehmen, verlängert ausgebildet werden. Ebenso ist es denkbar, daß der mittlere Härteboden 3b über eine geeignete Hebevorrichtung, die am Härtewagen (nicht eingezeichnet) angebracht ist, unmittelbar vor der Autoklavierung angehoben wird.

Zur Verbesserung von Dampf- bzw. Trocknungsmediumtransporten und Wärmeübergängen im Steininneren können durchgehende Löcher in dem Porenbetonkuchen angebracht sein. Je nach Herstellungsverfahren lassen sich diese Löcher im Kuchen beispielsweise dadurch anbringen, daß sie nach der Gärphase (vor dem Sägen) mit Nadeln in den Kuchen eingestochen werden.

Diese Maßnahme bewirkt eine gleichmäßigere Steintrocknung zwischen den Außenflächen und dem Kern des Porenbetonkuchens. Gleichzeitig wird dadurch die Materialoberfläche für das Trocknungsmedium erhöht.

Die Einbringung dieser Löcher ist besonders zweckmäßig, wenn eine ausreichende Konvektion im Autoklaveninneren und damit eine ausreichende Druckdifferenz zwischen den Öffnungen der Löcher vorherrscht. Anderenfalls sättigt das Trocknungsmedium in den Löchern ab und der gewünschte Trocknungseffekt im Steininneren stellt sich nicht ein.

Dadurch, daß der vom Umwälzer 4 eingespeiste Dampf mittels Dampfschienen in den Autoklaven geleitet wird, läßt sich der Dampf gezielt an die Stellen transportieren, an denen er effektiv sein soll, z.B. an die Seitenflächen des Kuchens.

Die Strömungsausrichtung und die Menge des Dampfes, der an den Dampfschienen 7a,7b austritt, läßt sich in einfacher Weise durch geeignete Anordnungen und unterschiedliche Durchmesser der Bohrungen in den Schienen einstellen. Der aufwendige Einbau von Leitblechen und Leitkaminen entfällt dadurch. Nichtsdestrotrotz können die Dampfschienen zusätzlich mit Leitblechen (nicht eingezeichnet) versehen werden.

Auch ohne Trocknung bewirkt die entstehende Konvektion eine gleichmäßigere Verteilung des Dampfes im Autoklaven. Die Ausbildung von Temperaturgradienten zwischen der Autoklavenober- und und der Autoklavenunterseite und die Gefahr einer ungleichmäßigen Härtung des Porenbetons wird dadurch vermindert.

Die Anordnung von Wärmetauschern, die beispielsweise mittels Thermalöl beheizt werden können, direkt an oder in unmittelbarer Nähe der Dampfschienen 7a,7b bewirkt eine Überheizung des Dampfes im Autoklavenraum. Dadurch entstehen keine Leitungsverluste außerhalb des Autoklaven. Wärmeenergie der Wärmetauscher, die nicht in die Dampfschienen 7a,7b übertragen wird, bewirkt eine Überhitzung des Dampfes im übrigen Autoklavenraum und ist somit nicht verloren.

Die ungünstigen geometrischen Strömungsbedingungen, die bisher eine Trocknung von Porenbeton im Inneren des Autoklaven erheblich erschwerten, da der Zwischenraum zwischen den Härteböden 3a,3b,3c zu gering war, werden insbesondere durch Anhebung des mittleren Kuchens vermieden.

Die Löcher im Kuchen bewirken eine vergrößerte Oberfläche der Kuchenform und damit verbesserte Wärmeübergänge und einen verbesserten Stofftransport im Inneren der Form. Dies bewirkt eine gleichmäßigere Trocknung des Porenbetonkuchens.

Nach dem erfindungsgemäßen Verfahren kann in Analogie zum aus der US-PS 2 524 303 bekannten Verfahren die Härtung und Trocknung der CSH-Baustoffe auf zwei verschiedene Arten erfolgen: Einmal nach Abschluß der Haltephase (nach der Härtung des Materials) und zum anderen während der Auffahr- und Haltephase (gleichzeitige Trocknung und Härtung).

Nach dem Einbringen des Materials in den Autoklaven wird - dem bisherigen Stand der Technik entsprechend - nach einer eventuell vorausgegangenen Spül- und Evakuierungsphase - der Druck im Autoklaven durch Einblasen von Frischdampf kontinuierlich auf einen Wert von ca. 12 bar Überdruck erhöht.

In der darauffolgenden Haltephase wird dieser Druck- und Temperaturzustand im Autoklaven solange aufrechterhalten, bis die Härtung des Materials weitestgehend oder vollständig abgeschlossen ist (ca. 2 bis 5 Stunden).

Nun kann durch Einschalten der Wärmequelle im Autoklaven und Inbetriebnahme des Umwälzers der Trocknungsvorgang eingeleitet werden.

Während des Aufheizvorgangs verdampft Wasser aus dem CSH-Material und der Druck im Autoklaven wird erhöht. Gemäß US-PS 2 524 303 kann dieser Druck nun durch geregeltes Abblasen über ein Abfahrdampfregelventil auf konstantem Niveau (12 bar Überdruck) gehalten (Temperaturerhöhung) oder reduziert werden (Temperaturkonstanz im Autoklaven). Nach Abschluß der Trocknungsphase wird durch geregeltes Abblasen des Dampfes über das Abfahrdampfregelventil der Druck im Autoklaveninneren auf Umgebungsbedingungen reduziert.

Alternativ kann die Trocknung aber auch gemäß dem in EP 0 624 562 B1 beschriebenen Pulsationsbetrieb durchgeführt werden. Die Druckerniedrigung erfolgt durch Abblasen von Dampf über das Abfahrdampfregelventil und die Druckerhöhung durch Verdampfen des Wassers aus der Porenbetonmasse. Der abgeblasene Dampf kann dabei entweder in einen anderen Autoklaven überströmen oder in einen Dampfspeicher gefahren werden und steht für weitere Autoklavierungen zur Verfügung. Mit zunehmenden Trocknungsgrad des Porenbetonkuchens verlängert sich auch die Zeit, bis ausreichend Wasser aus dem Kuchen zur Erhöhung des Druckes verdampft ist. Die Pulsbreiten werden daher mit zunehmender Trocknungsdauer immer länger.

Bei Trocknung während der Auffahr- und Haltephase wird nach der Spül- und Evakuierungsphase durch Einleiten von Frischdampf der Druck im Autoklaven bis auf einen bestimmten Wert (z.B. 5 bar Überdruck), der jedoch noch deutlich unter dem für herkömmliche Autoklavierungen erforderlichen Druckniveau (z.B. 12 bar Überdruck) liegt, erhöht. Die weitere Druckerhöhung auf den gewünschten Härtedruck (12 bar Überdruck) erfolgt nach Einschalten der Wärmequelle und des Umwälzers durch Verdampfung von Wasser aus der Materialoberfläche. Kennzeichnend für diesen Verfahrensschritt ist, daß während dieser Druckerhöhungsphase ständig die Temperatur an der Materialoberfläche mittels eines geeigneten Temperaturfühlers überwacht wird. Sobald die Temperatur an der Materialoberfläche einen vorgegebenen oberen Grenzwert (die zum jeweils vorherrschenden Druck korrespondierende Sattdampftemperatur) übersteigt, erfolgt durch Abschalten der Wärmequelle und Einspritzen von Wasser über die Düsen in den Dampfschienen 7a,7b eine Kühlung des erhitzten Dampfes im Autoklaven und damit eine Kühlung der Materialoberfläche.

Diese Temperaturüberwachung und Materialkühlung ist zweckmäßig, wenn verhindert werden soll, daß vor Ablauf der erforderlichen Härtezeit (ca. 2 bis 5 Stunden) zu viel Wasser aus der Materialoberfläche verdampft, wodurch die für die Härtung erforderliche CSH-Phasenausbildung nicht mehr stattfinden kann und das Material dadurch an der Oberfläche zerstört würde. Nach Abschluß dieser kombinierten Auffahr- und Härtephase kann die Abfahrphase eingeleitet werden, oder je nach gewünschtem Trocknungsgrad, eine weitere Trocknung z.B. nach dem oben beschriebenen Pulsationsverfahren durchgeführt werden. Die Größe des unteren Auffahrdrucks ist in erster Linie vom Wassergehalt an der Oberfläche des Porenbetonkuchens und somit vom eingebrachten Grünlingsmaterial und auch vom Füllungsgrad im Autoklaven abhängig. Je mehr Wasser an der Materialoberfläche zur Verdampfung zur Verfügung steht, umso kleiner kann dieser Wert gewählt werden. Dieser Wert kann entweder experimentell oder durch Berechnung (bei Kenntnis der Trocknungsverlaufskurve des Materials) bestimmt werden.

Je nach Höhe und Länge der Wärmeenergiezufuhr im Autoklaveninneren kann somit die gewünschte Restfeuchte des Materials während der Härtung und Trocknung eingestellt werden. Die sich einstellende Restfeuchte (in Abhängigkeit von der Trocknungsdauer) ist vom Material abhängig und kann entweder experimentell oder durch Rechnung (bei Kenntnis der Trocknungsverlaufskurve) ermittelt werden. Durch Variation der Dauer der Energiezufuhr kann nun äußerst wirtschaftlich getrocknet (d.h. trockenes Material bei gleichem Energieaufwand wie bei bisherigen Autoklavierungen unter Sattdampf), oder aber jeder beliebige Trocknungsgrad eingestellt werden.

Je geringer die gewünschte Restfeuchte des Materials gewählt wird, umso mehr Wasser muß aus dem Material verdampft werden und umso mehr Dampf wird auch im Autoklaveninneren produziert. Ab einem bestimmten Trocknungsgrad ist die so erzeugte Dampfmenge größer als zum Hochfahren des nächsten Autoklaven auf den Anfangsdruck (z.B. 6 bar) erforderlich. Dieser überschüssige, überhitzte und hoch vorgespannte Dampf (12 bar Überdruck) kann beispielsweise zur Erwärmung von Wärmekammern und Wärmetunneln oder zur Erzeugung elektrischen Stroms (z.B. für den externen Umwälzer) mittels einer Dampfturbine verwendet werden.

Nach der Erfindung kann somit bei gleichem Energieaufwand wie bisher trockeneres Material beim kombinierten Härte- und Trocknungsverfahren erzeugt werden. Gewünschte Restfeuchten sind durch Dauer des Trocknungsvorganges einstellbar. Das erfindungsgemäße Verfahren ist ein materialschonendes Verfahren durch Überwachung der Oberflächentemperatur. Die Einstellung der Dampfqualität durch Überhitzung und Kühlung und dadurch Reduzierung von Härteschäden ist möglich.

Nach der Erfindung ist noch eine weitere Variante des Trocknungsverfahrens möglich. Bei dieser Variante wird nur während der Hochfahrphase getrocknet. Das Verfahren läuft wie folgt ab: Nach Beendigung der Spül- und Vakuumphase wird der Autoklav entweder mit Frischdampf oder durch Dampf aus einem Speicher oder einem anderen Autoklaven bis auf einem vorgegebenen Druck (z.B. 2 bis 5 bar) hochgefahren. Anschließend wird bis zum Erreichen des gewünschten Haltedrucks (z.B. 12 bis 16 bar) durch Einschalten der zusätzlichen Wärmequelle und der Dampfumwälzung Wasser aus den Formblöcken verdampft. Um Anlagenteile einzusparen, kann gegebenenfalls auf die seitlichen Wärmetauscherregister 8c, 8d verzichtet werden. Die Geschwindigkeit der Verdampfung und die Temperatur im Autoklaven kann dabei durch Regelung der Wärmequelle und des Umwälzers oder durch Frischwassereinspritzung eingestellt werden. Nach Erreichen des Haltedrucks (12 bis 16 bar) werden Wärmequelle und Umwälzer abgeschaltet oder in der Leistung soweit gedrosselt, daß lediglich Druck und Wärmeverluste des Autoklaven ausgeglichen werden. Eine weitere Trocknung während der Haltephase soll dabei nicht erfolgen.

Vorteile dieses Verfahrens sind, daß bestehende Autoklavenanlagen beibehalten werden können. Die Temperatur im Autoklaven überschreitet während der Hochfahrphase nicht die Sattdampftemperatur des Haltedrucks. Eine Auslegung des Autoklaven auf höhere Temperaturen ist dadurch nicht erforderlich. Mehrere Autoklaven können mit nur einer Thermalölanlage und einem Dampfumwälzer betrieben werden, da diese Anlagen nur während einer relativ kurzen Zeitspanne (in der Hochfahrphase) während eines Autoklavierungsprozesses benötigt werden. Bei einer Trocknung während der Haltephase (Variante 1 oder 2) fällt durch Verdampfung des Wassers aus den Formkörpern zusätzlicher Dampf an. Dieser Dampf muß während der Haltephase abgeblasen werden. Die dazu notwendigen technischen Anlagen (Abfahrregelarmatur, Abfahrdampfschiene) sind auch bei der Kombination mehrerer Autoklaven nur einmal erforderlich.

Die Dampfschienen 7a, 7b, 9 können auch so ausgebildet sein, daß die Dampfantrittsöffnungen gleiche und/oder unterschiedliche Durchmesser aufweisen. Sie können auch mit z.B. auswechselbaren Düsen oder Stutzen bestückt sein, die z.B. unterschiedlich lang sein können, oder derart gerichtet oder gekrümmt sein, daß vorbestimmte Ausströmrichtungen erzielt werden.

Nach einer weiteren Ausführungsform der Erfindung sind die seitlichen Wärmetauscherregister 8c, 8d so ausgebildet und angeordnet, daß der Zwischenraum zwischen der Oberfläche der Wärmetauscherregister und der Außenfläche der beiden äußeren Formkörper 2a, 2c in etwa dem Abstand zwischen den Formkörpern 2d entspricht. Dabei können oberhalb der Zwischenräume zwischen Wärmetauscherregister 8c, 8d und den äußeren Formkörpern 2a, 2c zwei weitere Dampfschienen der Art 7a, 7b angebracht sein.

## Patentansprüche

1. Vorrichtung zum Härten und Trocknen von Calciumsilicathydrat-gebundenen Formkörpern in Ausgestaltung eines Autoklaven (1), in dessen Innenraum bodenseitig mindestens eine sich in Längsrichtung erstreckende Frischdampfschiene (10) und sich in Längsrichtung erstreckende, auf seitlichem Abstand voneinander angeordnete Tragelemente (3a, 3b, 3c) für die zu härtenden und zu trocknenden Formkörperblöcke (2a, 2b, 2c) aufnehmenden Lagerelemente angeordnet sind und gegebenenfalls im Bereich der seitlichen Autoklavenwände Wärmequellen (8a, 8d) vorgesehen sind,
**dadurch gekennzeichnet, daß**
a) der seitliche Abstand der Lagerelemente sowie der Formkörperblöcke (2a, 2b, 2c) so groß gewählt ist, daß ein Strömungskanal (2d) zwischen den Formkörperblöcken (2a, 2b, 2c) vorgegeben ist,
b) eine Dampfumwälzeinrichtung vorhanden ist, mit der beim Umwälzen der Dampf im wesentlichen durch den Strömungskanal (2d) gespült wird,
c) wobei oberhalb des Strömungskanals (2d) mindestens eine obere Dampfschiene (7a, 7b) für die Dampfumwälzung angeordnet ist.

2. Vorrichtung nach Anspruch 1, dadurch gekennzeichnet, daß mindestens eine weitere Dampfschiene (9) unter den Härteböden (3a, 3b, 3c) im Bereich eines Strömungskanals (2d) angeordnet ist.

3. Vorrichtung nach Anspruch 1 und/oder 2, dadurch gekennzeichnet, daß zur Bildung einer Dampfumwälzeinrichtung im Kreislaufbetrieb die obere Dampfschiene (7a, 7b) mit dem Ausgang eines außerhalb des Autoklaven (1) angebrachten Umwälzers (4) und die untere Dampfschiene (9) mit dem Eingang des Umwälzers (4) verbunden sind.

4. Vorrichtung nach Anspruch 3, dadurch gekennzeichnet, daß der Umwälzer (4) mittels eines Ventilators realisiert ist.

5. Vorrichtung nach Anspruch 3, dadurch gekennzeichnet, daß der Umwälzer (4) durch eine Dampfstrahldüse realisiert ist.

6. Vorrichtung nach einem oder mehreren der Ansprüche 1 bis 5, dadurch gekennzeichnet, daß die Frischdampfschiene (10) zur Absaugung des durch die obere Dampfschiene (7a, 7b) eingedrückten Dampfes eingerichtet ist.

7. Vorrichtung nach Anspruch 6, dadurch gekennzeichnet, daß die Frischdampfschiene (10) über eine außerhalb des Autoklaven (1) angebrachte Drei-Wege-Ventil-Einrichtung sowohl mit einer Frischdampfzufuhreinrichtung als auch mit einer Absaugeinrichtung in Verbindung steht.

8. Vorrichtung nach einem oder mehreren der Ansprüche 1 bis 7, dadurch gekennzeichnet, daß die obere Dampfschiene (7a, 7b) eine Dampfüberhitzungseinrichtung aufweist und zu diesem Zweck vorzugsweise mit einem Wärmetauscher-Register (8a, 8b), das zum Beispiel an, innerhalb oder in der Nähe der Dampfschiene (7a, 7b) angebracht ist, kombiniert ist.

9. Vorrichtung nach Anspruch 8, dadurch gekennzeichnet, daß auch die Dampfschiene (9) eine Dampfüberhitzungseinrichtung zum Beispiel an, innerhalb oder in der Nähe der Dampfschiene (9) aufweist.

10. Vorrichtung nach einem oder mehreren der Ansprüche 1 bis 9, dadurch gekennzeichnet, daß in den Dampfzuleitungen zu den Dampfschienen (7a und/oder 7b und/oder 9 und/oder 10) Zuleitungen und Einspritzöffnungen zum Einbringen von Frischwasser in den Dampfstrom angeordnet sind.

11. Vorrichtung nach einem oder mehreren der Ansprüche 1 bis 10, dadurch gekennzeichnet, daß die Anordnung der Dampfschiene (7a, 7b) selbst und die Anordnung und der Durchmesser der Dampfaustrittsöffnungen in der Dampfschiene und vorzugsweise auch ihre räumliche Position in Form von z.B. Düsen oder Stutzen so gewählt sind, daß der größte Teil des eingedrückten Dampfes in den Strömungskanal (2d) gespült wird, wobei nur ein kleinerer Teil der Dampfmenge durch den Raum zwischen den Außenflächen der Formkörperblöcke (3a, 3c) und der Autoklavenwand entlangströmt.

12. Vorrichtung nach einem oder mehreren der Ansprüche 1 bis 11, dadurch gekennzeichnet, daß ein Härteboden (3a oder 3b oder 3c) gegenüber einem anderen Härteboden (3a oder 3b oder 3c) angehoben angeordnet ist.

13. Vorrichtung nach Anspruch 12, dadurch gekennzeichnet, daß die Höhe der Anhebung etwa der Breite eines Strömungskanals (2d) entspricht.

14. Vorrichtung nach einem oder mehreren der Ansprüche 1 bis 13, dadurch gekennzeichnet, daß die Dampfschienen (7a, 7b, 9, 10) mit Leitblechen ausgerüstet sind.

15. Vorrichtung nach einem oder mehreren der Ansprüche 8 bis 14, dadurch gekennzeichnet, daß die Wärmetauscher-Register (8a, 8b) mit Thermalöl beheizbar ausgebildet sind.

16. Vorrichtung nach einem oder mehreren der Ansprüche 1 bis 15, dadurch gekennzeichnet, daß die Breite der Strömungskanäle 5 bis 20, insbesondere 10 bis 20 cm beträgt.

17. Vorrichtung nach einem oder mehreren der Ansprüche 1 bis 16, dadurch gekennzeichnet, daß die seitlichen Wärmetauscherregister (8c, 8d) so ausgebildet und angeordnet sind, daß der Zwischenraum zwischen der Oberfläche der Wärmetauscherregister und der Außenfläche der beiden äußeren Formkörper (2a, 2c) in etwa dem Abstand zwischen den Formkörpern (2d) entspricht.

18. Vorrichtung nach einem oder mehreren der Ansprüche 1 bis 17, dadurch gekennzeichnet, daß oberhalb der Zwischenräume zwischen Wärmetauscherregister (8c, 8d) und den äußeren Formkörpern (2a, 2c) zwei weitere Dampfschienen der Art (7a, 7b) angebracht sind.

19. Verfahren zum Härten und Trocknen von Calciumsilikathydratgebundenen Formkörpern in einem Autoklaven in einer Wasserdampfatmosphäre mit einer Auffahrphase, einer Haltephase und einer Abfahrphase, wobei dabei die Formkörper getrocknet werden, insbesondere unter Verwendung einer Vorrichtung nach einem oder mehreren der Ansprüche 1 bis 16, dadurch gekennzeichnet, daß die zu härtenden Formkörper Zwischenräume (2d) bildend auf seitlichem Abstand voneinander angeordnet werden und daß durch die Zwischenräume zum Härten und Trocknen oder lediglich zum Trocknen Dampf gespült wird.

20. Verfahren nach Anspruch 19, dadurch gekennzeichnet, daß eine größere Dampfmenge in die Zwischenräume (2d) und eine geringere Dampfmenge durch den Raum zwischen den Formkörperblöcken und der Autoklavenwand gespült werden.

21. Verfahren nach Anspruch 19 und/oder 20, dadurch gekennzeichnet, daß Zwischenräume zwischen 5 und 20, insbesondere zwischen 10 und 20cm verwendet werden.

22. Verfahren nach einem oder mehreren der Ansprüche 19 bis 21, dadurch gekennzeichnet, daß ein Formkörperblock in der Höhe angehoben angeordnet wird.

23. Verfahren nach einem oder mehreren der Ansprüche 19 bis 22, dadurch gekennzeichnet, daß unterhalb der Formkörperblöcke eine Dampfschiene zum Abführen von Dampf verwendet wird.

24. Verfahren nach einem oder mehreren der Ansprüche 19 bis 23, dadurch gekennzeichnet, daß eine Dampfumwälzung im Kreislaufbetrieb verwendet wird.

25. Verfahren nach einem oder mehreren der Ansprüche 19 bis 24, dadurch gekennzeichnet, daß während der Dampfumwälzung wahlweise z. B. abwechselnd überhitzter Dampf und gekühlter Dampf verwendet wird.

26. Verfahren nach Anspruch 25, dadurch gekennzeichnet, daß der gekühlte Dampf durch Einspritzen von Wasser in die Dampfzuführleitung erzeugt wird.

27. Verfahren nach einem oder mehreren der Ansprüche 19 bis 26, dadurch gekennzeichnet, daß zur Erzeugung eines überhitzten Dampfes Wärmetauscher-Register verwendet werden, die den für die Dampfumwälzung verwendeten Dampfschienen zugeordnet sind.

28. Verfahren nach Anspruch 27, dadurch gekennzeichnet, daß die Wärmetauscher-Register mit Thermalöl betrieben werden.

29. Verfahren nach einem oder mehreren der Ansprüche 19 bis 28, dadurch gekennzeichnet, daß die Trocknung im Pulsationsbetrieb durchgeführt wird, wobei zur Druckerniedrigung Dampf abgeblasen und zur Druckerhöhung Dampf durch Verdampfen des Wassers aus der Formkörpermasse erzeugt wird.

30. Verfahren nach einem oder mehreren der Ansprüche 19 bis 29, dadurch gekennzeichnet, daß die Temperatur an der Materialoberfläche mittels eines geeigneten Temperaturfühlers gemessen und die Überhitzung bzw. Kühlung des Dampfes entsprechend dem Meßwert geregelt werden.

31. Verfahren nach einem oder mehreren der Ansprüche 1 bis 16, dadurch gekennzeichnet, daß ausschließlich während der Auffahrphase getrocknet und während der Haltephase nur gehärtet wird.

32. Verfahren nach Anspruch 31, dadurch gekennzeichnet, daß der Dampfumwälzer (4) mit den Wärmetauscher-Registern (8a, 8b) nur während der Auffahrphase verwendet wird.

33. Verfahren nach Anspruch 31 oder 32, dadurch gekennzeichnet, daß der während der Trocknung in der Auffahrphase entstehende Dampf zur Druckerzeugung im Autoklaven verwendet wird.

34. Verfahren nach einem oder mehreren der Ansprüche 31 bis 33, dadurch gekennzeichnet, daß solange getrocknet wird, bis die Haltephase erreicht ist.

35. Verfahren nach einem oder mehreren der Ansprüche 31 bis 34, gekennzeichnet durch die kennzeichnenden Merkmale eines oder mehrerer der Ansprüche 19 bis 30.

## Claims

1. Device for hardening and drying calcium silicate hydrate bonded shaped bodies, in the form of an autoclave (1), in the interior of which, on the bottom side, at least one live steam rail (10), which extends in the longitudinal direction, and support elements (3a, 3b, 3c), which extend in the longitudinal direction and are arranged at a lateral distance from one another, for bearing elements, which accommodate the shaped blocks (2a, 2b, 2c) to be hardened and dried, are arranged, and if appropriate heat sources (8a, 8d) are provided in the region of the autoclave side walls, characterized in that
a) the lateral distance between the bearing elements and the shaped blocks (2a, 2b, 2c) is selected to be sufficiently large for there to be a flow channel (2d) between the shaped blocks (2a, 2b, 2c),
b) a steam circulation device is present, by means of which, during circulation, the steam is substantially flushed through the flow channel (2d),
c) at least one upper steam rail (7a, 7b) for the circulation of steam being arranged above the flow channel (2d).

2. Device according to Claim 1, characterized in that at least one further steam rail (9) is arranged beneath the hardening bases (3a, 3b, 3c) in the region of a flow channel (2d).

3. Device according to Claim 1 and/or 2, characterized in that, in order to form a steam circulation device operating in a loop, the upper steam rail (7a, 7b) is connected to the outlet of a circulator (4) which is arranged outside the autoclave (1) and the lower steam rail (9) is connected to the inlet of the circulator (4).

4. Device according to Claim 3, characterized in that the circulator (4) is realized by means of a ventilator.

5. Device according to Claim 3, characterized in that the circulator (4) is realized by means of a steam jet nozzle.

6. Device according to one or more of Claims 1 to 5, characterized in that the live steam rail (10) is designed to suck out the steam injected through the upper steam rail (7a, 7b).

7. Device according to Claim 6, characterized in that the live steam rail (10) is connected, via a three-way valve device which is arranged outside the autoclave (1), both with a live steam feed device and with a suction device.

8. Device according to one or more of Claims 1 to 7, characterized in that the upper steam rail (7a, 7b) has a steam-superheating device and, for this purpose, is preferably combined with a heat exchanger register (8a, 8b), which is arranged, for example, on, inside or in the region of the steam rail (7a, 7b).

9. Device according to Claim 8, characterized in that the steam rail (9) also has a steam-superheating device, for example on, inside or in the region of the steam rail (9).

10. Device according to one or more of Claims 1 to 9, characterized in that feed lines and injection openings for introducing cold water into the flow of steam are arranged in the steam feed lines for the steam rails (7a and/or 7b and/or 9 and/or 10).

11. Device according to one or more of Claims 1 to 10, characterized in that the arrangement of the steam rail (7a, 7b) itself and the arrangement and the diameter of the steam outlet openings in the steam rail, and preferably also their spatial position in the form of, for example, nozzles or pipe stubs, are selected in such a manner than most of the injected steam is flushed into the flow channel (2d), with only a relatively small proportion of the volume of steam flowing along through the area between the outer surfaces of the shaped blocks (2a, 2c) and the autoclave wall.

12. Device according to one or more of Claims 1 to 11, characterized in that a hardening base (3a or 3b or 3c) is at an elevated level by comparison with another hardening base (3a or 3b or 3c).

13. Device according to Claim 12, characterized in that the height of this elevation approximately corresponds to the width of a flow channel (2d).

14. Device according to one or more of Claims 1 to 13, characterized in that the steam rails (7a, 7b, 9, 10) are equipped with baffle plates.

15. Device according to one or more of Claims 8 to 14, characterized in that the heat exchanger registers (8a, 8b) are designed so that they can be heated with heat-transfer oil.

16. Device according to one or more of Claims 1 to 15, characterized in that the width of the flow channels is 5 to 20 cm, in particular 10 to 20 cm.

17. Device according to one or more of Claims 1 to 16, characterized in that the lateral heat exchanger registers (8c, 8d) are designed and arranged in such a way that the space between the surface of the heat exchanger registers and the outer surface of the two outer shaped bodies (2a, 2c) approximately corresponds to the distance between the shaped bodies (2d).

18. Device according to one or more of Claims 1 to 17, characterized in that two further steam rails of the type (7a, 7b) are-arranged above the spaces between heat exchanger registers (8c, 8d) and the outer shaped bodies (2a, 2c).

19. Process for hardening and drying calcium silicate hydrate bonded shaped bodies in an autoclave in a steam atmosphere, having a run-up phase, a holding phase and a run-down phase, during which the shaped bodies are dried, in particular using a device according to one or more of Claims 1 to 16, characterized in that the shaped bodies to be hardened are arranged at a lateral distance from one another, thus forming spaces (2d), and in that steam is flushed through the spaces for the purpose of hardening and drying, or only for the purpose of drying.

20. Process according to Claim 19, characterized in that a relatively large volume of steam is flushed into the spaces (2d) and a relatively small volume of steam is flushed through the area between the shaped blocks and the autoclave wall.

21. Process according to Claim 19 and/or 20, characterized in that spaces of between 5 and 20 cm, in particular of between 10 and 20 cm, are used.

22. Process according to one or more of Claims 19 to 21, characterized in that one shaped block is arranged at an elevated level.

23. Process according to one or more of Claims 19 to 22, characterized in that a steam rail for removing steam is used beneath the shaped blocks.

24. Process according to one or more of Claims 19 to 23, characterized in that a steam circulation operating with a loop is used.

25. Process according to one or more of Claims 19 to 24, characterized in that superheated steam and cooled steam are used as desired, for example alternately, during the steam circulation.

26. Process according to Claim 25, characterized in that the cooled steam is generated by injecting water into the steam feed line.

27. Process according to one or more of Claims 19 to 26, characterized in that heat exchanger registers, which are assigned to the steam rails used for the steam circulation, are used to generate superheated steam.

28. Process according to Claim 27, characterized in that the heat exchanger registers are operated using heat-transfer oil.

29. Process according to one or more of Claims 19 to 28, characterized in that the drying is carried out in pulsed mode, steam being blown off in order to reduce the pressure and steam being generated by evaporating the water out of the shaped-body mass in order to increase the pressure.

30. Process according to one or more of Claims 19 to 29, characterized in that the temperature at the surface of the material is measured by means of a suitable temperature sensor and the superheating or cooling of the steam is adjusted in accordance with the measured value.

31. Process according to one or more of Claims 1 to 16, characterized in that drying is carried out exclusively during the run-up phase and during the holding phase only hardening is carried out.

32. Process according to Claim 31, characterized in that the steam circulator (4) with the heat exchanger registers (8a, 8b) is used only during the run-up phase.

33. Process according to Claim 31 or 32, characterized in that the steam produced during drying in the run-up phase is used to generate pressure in the autoclave.

34. Process according to one or more of Claims 31 to 33, characterized in that drying is carried out until the holding phase is reached.

35. Process according to one or more of Claims 31 to 34, having the characterizing features of one or more of Claims 19 to 30.

## Revendications

1. Appareil pour durcir et sécher des objets façonnés liés par du silicate de calcium hydraté, se présentant sous la forme d'un autoclave (1), dans l'espace intérieur duquel sont disposés, côté fond, au moins une rampe de vapeur fraîche (10) s'étendant dans la direction longitudinale, et des éléments porteurs (3a, 3b, 3c) s'étendant dans la direction longitudinale, disposés à une certaine distance latérale les uns des autres, destinés à des éléments de support qui vont recevoir les blocs façonnés (2a, 2b, 2c) qui doivent être durcis et séchés, des sources de chaleur (8a, 8d) étant éventuellement prévues dans la zone des parois latérales de l'autoclave, caractérisé en ce que
a) la distance latérale entre les éléments de support et entre les blocs façonnés (2a, 2b, 2c) est choisie à une valeur suffisamment grande pour qu'un canal d'écoulement (2d) soit défini entre les blocs façonnés (2a, 2b, 2c),
b) il possède un dispositif de recirculation de vapeur, a l'aide duquel la vapeur, lors d'une recirculation, est envoyée en rinçage essentiellement par le canal d'écoulement (2d),
c) au moins une rampe de vapeur supérieure (7a, 7b) étant disposée au-dessus du canal d'écoulement (2d), pour la recirculation de la vapeur.

2. Appareil selon la revendication 1, caractérisé en ce qu'au moins une autre rampe de vapeur (9) est disposée en dessous des planchers de durcissement (3a, 3b, 3c) dans la zone d'un canal d'écoulement (2d).

3. Appareil selon la revendication 1 et/ou 2, caractérisé en ce que, pour former un dispositif de recirculation de vapeur en mode recyclage, la rampe de vapeur supérieure (7a, 7b) communique avec la sortie d'un moyen de recirculation (4) rapporté à l'extérieur de l'autoclave (1), et la rampe de vapeur inférieure (9) communique avec l'entrée du moyen de recirculation (4).

4. Appareil selon la revendication 3, caractérisé en ce que le moyen de recirculation (4) est réalisé à l'aide d'un ventilateur.

5. Appareil selon la revendication 3, caractérisé en ce que le moyen de recirculation est réalisé par une buse à jet de vapeur.

6. Appareil selon l'une ou plusieurs des revendications 1 à 5, caractérisé en ce que la rampe de vapeur fraîche (10) est disposée de façon à permettre l'aspiration de la vapeur injectée par la rampe de vapeur supérieure (7a, 7b).

7. Appareil selon la revendication 6, caractérisé en ce que la rampe de vapeur fraîche (10) communique, par l'intermédiaire d'un dispositif de vanne à 3 voies rapporté à l'extérieur de l'autoclave (1), tant avec un dispositif d'amenée de vapeur fraîche qu'avec un dispositif d'aspiration.

8. Appareil selon l'une ou plusieurs des revendications 1 à 7, caractérisé en ce que la rampe de vapeur supérieure (7a, 7b) est combiné à un dispositif de surchauffe de vapeur et, à cette fin, est combiné de préférence avec registre (8a, 8b) d'échangeur de chaleur, qui est rapporté par exemple contre la rampe de vapeur (7a, 7b), ou à l'intérieur ou au voisinage de cette dernière.

9. Appareil selon la revendication 8, caractérisé en ce que la rampe de vapeur (9), comporte elle aussi un dispositif de surchauffe de vapeur, disposé par exemple contre la rampe de vapeur (9) ou à l'intérieur ou au voisinage de cette dernière.

10. Appareil selon l'une ou plusieurs des revendications 1 à 9, caractérisé en ce que des conduites d'amenée et des ouvertures d'injection, destinées à introduire de l'eau fraîche dans le courant de vapeur, sont disposées dans les conduites d'amenée de vapeur allant vers les rampes de vapeur (7a et/ou 7b et/ou 9 et/ou 10).

11. Appareil selon l'une ou plusieurs des revendications 1 à 10, caractérisé en ce que la disposition de la rampe de vapeur (7a, 7b) proprement dite, et la disposition et le diamètre des ouvertures de sortie de vapeur aménagées dans la rampe de vapeur, et de préférence aussi sa position spatiale, par exemple sous forme de buses ou de tubulures, sont choisies de façon que la plus grande partie de la vapeur injectée passe en rinçage dans le canal d'écoulement (2d), seulement une partie plus petite de la quantité de vapeur s'écoulant le long de l'espace situé entre les surfaces extérieures des blocs façonnés (3a, 3c) et la paroi de l'autoclave.

12. Appareil selon l'une ou plusieurs des revendications 1 à 11, caractérisé en ce qu'un plancher de durcissement (3a ou 3b ou 3c) est disposé plus haut qu'un autre plancher de durcissement (3a ou 3b ou 3c).

13. Appareil selon la revendication 12, caractérisé en ce que la différence de hauteur correspondant approximativement à la largeur d'un canal d'écoulement (2d).

14. Appareil selon l'une ou plusieurs des revendications 1 à 13, caractérisé en ce que les rampes de vapeur (7a, 7b, 9, 10) sont équipées de déflecteurs.

15. Appareil selon l'une ou plusieurs des revendications 8 à 14, caractérisé en ce que les registres (8a, 8b) d'échangeur de chaleur sont configurés de façon à pouvoir être chauffés avec une huile thermique.

16. Appareil selon l'une ou plusieurs des revendications 1 à 15, caractérisé en ce que la largeur des canaux d'écoulement est de 5 à 20 et en particulier de 10 à 20 cm.

17. Appareil selon l'une ou plusieurs des revendications 1 à 16, caractérisé en ce que les registres latéraux (8c, 8d) de l'échangeur de chaleur sont configurés est disposés de façon que l'espace intermédiaire entre la surface supérieure des registres d'échangeur de chaleur et la surface extérieure des deux objets façonnés extérieurs (2a, 2c) correspondent approximativement à la distance entre les objets façonnés (2d).

18. Appareil selon l'une ou plusieurs des revendications 1 à 17, caractérisé en ce que deux rampes de vapeur supplémentaires du type des rampes (7a, 7b) sont rapportées au-dessus des espaces intermédiaires entre les registres (8c, 8d) d'échangeur de chaleur et les objets façonnés extérieurs (2a, 2c).

19. Procédé pour durcir et sécher des objets façonnés liés par du silicate de calcium hydraté, dans un autoclave dans une atmosphère de vapeur d'eau avec une phase de montée, une phase de maintien et une phase de descente, procédé par lequel les objets façonnés subissent un séchage, en particulier par utilisation d'un appareil selon l'une ou plusieurs des revendications 1 à 16, caractérisé en ce que les objets façonnés à durcir sont disposés en formant des espaces intermédiaires (2d) avec une certaine distance latérale les uns des autres, et que l'on envoie de la vapeur en rinçage dans les espaces intermédiaires, pour assurer le séchage et le durcissement, ou seulement le séchage de la vapeur.

20. Procédé selon la revendication 19, caractérisé en ce qu'on envoie en rinçage une grande quantité de vapeur dans les espaces intermédiaires (2d) et une petite quantité de vapeur dans l'espace situé entre les blocs façonnés et la paroi de l'autoclave.

21. Procédé selon la revendication 19 et/ou 20, caractérisé en ce qu'on utilise des espaces intermédiaires de 5 à 20 et en particulier de 10 à 20 cm.

22. Procédé selon l'une ou plusieurs des revendications 19 à 20, caractérisé en ce qu'un bloc façonné est disposé plus haut que les autres.

23. Procédé selon l'une ou plusieurs des revendications 19 à 22, caractérisé en ce qu'une rampe de vapeur est utilisée, en dessous des blocs façonnés, pour évacuer la vapeur.

24. Procédé selon l'une ou plusieurs des revendications 19 à 23, caractérisé en ce qu'on utilise une recirculation de vapeur en mode recyclage.

25. Procédé selon l'une ou plusieurs des revendications 19 à 24, caractérisé en ce que, pendant la recirculation de la vapeur, on utilise au choix, par exemple en alternance, de la vapeur surchauffée et de la vapeur refroidie.

26. Procédé selon la revendication 25, caractérisé en ce que la vapeur refroidie est produite par injection d'eau dans la conduite d'amenée de vapeur.

27. Procédé selon l'une ou plusieurs des revendications 19 à 26, caractérisé en ce que l'on utilise, pour produire une vapeur surchauffée, des registres d'échangeur de chaleur, qui sont affectés aux rampes de vapeur utilisées pour la recirculation de vapeur.

28. Procédé selon la revendication 27, caractérisé en ce que les registres d'échangeur de chaleur fonctionnent avec une huile thermique.

29. Procédé selon l'une ou plusieurs des revendications 19 à 28, caractérisé en ce que le séchage est réalisé en mode pulsé, par lequel on évacue de la vapeur pour diminuer la pression, et, pour augmenter la pression, on produit de la vapeur par évaporation d'eau à partir de la masse des objets façonnés.

30. Procédé selon l'une ou plusieurs des revendications 19 à 29, caractérisé en ce que la température sur la surface du matériau est mesurée à l'aide d'un capteur de température approprié, la surchauffe ou le refroidissement de la vapeur étant régulés en fonction de la valeur de mesure.

31. Procédé selon l'une ou plusieurs des revendications 1 à 16, caractérisé en ce que le séchage a lieu exclusivement pendant la phase de montée, et que le durcissement n'est effectué que pendant la phase de maintien.

32. Procédé selon la revendication 31, caractérisé en ce que le moyen de recirculation de vapeur comportant les registres (8a, 8b) d'échangeur de chaleur n'est utilisé que pendant la phase de montée.

33. Procédé selon la revendication 31 ou 32, caractérisé en ce que la vapeur produite pendant le séchage dans la phase de montée est utilisée pour produire une pression dans l'autoclave.

34. Procédé selon l'une ou plusieurs des revendications 31 à 33, caractérisé en ce qu'on procède au séchage jusqu'à ce que l'on arrive à la phase de maintien.

35. Procédé selon l'une ou plusieurs des revendications 31 à 34, caractérisé par les éléments caractéristiques d'une ou plusieurs des revendications 19 à 30.
